(19)

Europäisches Patentamt
European Patent Office
Office européen des brevets

(11) **EP 3 609 150 A1**

(12) **EUROPEAN PATENT APPLICATION**

(43) Date of publication:
**12.02.2020 Bulletin 2020/07**

(51) Int Cl.:
**H04L 29/06** *(2006.01)* **G06N 5/04** *(2006.01)*

(21) Application number: **18188529.4**

(22) Date of filing: **10.08.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **British Telecommunications public limited company London EC1A 7AJ (GB)**

(72) Inventor: **The designation of the inventor has not yet been filed**

(74) Representative: **British Telecommunications public limited company Intellectual Property Department Ground Floor, Faraday Building 1 Knightrider Street London EC4V 5BT (GB)**

(54) **GROUPING DATA ITEMS**

(57)     A computer implemented method of grouping a set of data items comprising the steps of: receiving a graded similarity relation between items in the set of items, each graded similarity relation defining, for a pair of items, whether the items are determined to be similar and indicating a level of similarity; receiving a definition of a set of levels of similarity as membership levels such that a pair of items being determined to have a level of similarity meeting a membership level is associated with the membership level; partitioning the set of data items into a hierarchy of classes of data item each corresponding to a membership level by determining association of data items to each membership level.

*FIGURE 3f*

EP 3 609 150 A1

**Description**

The present invention relates to grouping data items.

In computer science there are many applications in which it is desirable to group values, data items or objects with multiple attributes. For example, such groupings find applications in the analysis of system access logs (where time, users, internet protocol destinations and services accessed may be grouped into finer or coarser granules) and analysis of physical security logs (where time, users and nature of building accessed are relevant). Improvements to the state of the art in achieving such groupings are desired.

The present invention accordingly provides, in a first aspect, a computer implemented method of grouping a set of data items comprising the steps of: receiving a graded similarity relation between items in the set of items, each graded similarity relation defining, for a pair of items, whether the items are determined to be similar and indicating a level of similarity; receiving a definition of a set of levels of similarity as membership levels such that a pair of items being determined to have a level of similarity meeting a membership level is associated with the membership level; partitioning the set of data items into a hierarchy of classes of data item each corresponding to a membership level by determining association of data items to each membership level.

Preferably the level of similarity is one of a set of predefined levels of similarity.

Preferably the graded similarity relations are defined algorithmically.

Preferably the algorithm for defining graded similarity relations includes one or more rules for determining similarity between pairs of items in the set.

Preferably the algorithm computes a table of similarity relations between pairs of items.

Preferably the data items are security log records for a computer network, each record corresponding to a security occurrence in the network.

Preferably the security log records are generated by one or more of: a network intrusion detection system; a virus detection system; a network proxy; a malware detection system; and a network appliance monitoring function.

Preferably at least one portion of the records in the set of data items is determined to correspond to a network attack and the membership levels are defined to elicit at least one partition of the set of data items corresponding to such portion of data items.

Preferably the method further comprises: receiving a new data item as a security log record identifying one or more network attached devices; and determining a partition of the set of data items into which the new data item belongs based on the membership levels so as to determine if the new data item is similar to records in the portion of records determined to correspond to a network attack.

Preferably the method further comprises, responsive to a determination that the new data item is similar to records in the portion of records determined to correspond to a network attack, trigging one or more of: remedial; protective; and corrective measures in respect of the one or more network attached devices identified by the new data item.

The present invention accordingly provides, in a second aspect, a computer system including a processor and memory storing computer program code for performing the steps of the method set out above.

The present invention accordingly provides, in a third aspect, a computer program element comprising computer program code to, when loaded into a computer system and executed thereon, cause the computer to perform the steps of the method set out above.

Embodiments of the present invention will now be described, by way of example only, with reference to the accompanying drawings, in which:

Figure 1 is a block diagram a computer system suitable for the operation of embodiments of the present invention;

Figure 2a illustrates exemplary tolerance classes and clusters including a simple case for a set of values in the range 0-24;

Figure 2b illustrates a continuous fuzzy subset according to embodiments of the present invention;

Figures 3a to 3f illustrate the operation of an algorithm to update a tree represented using a set for each graded partition according to embodiments of the present invention;

Figures 4a to 4e illustrate the operation of an algorithm to update a tree represented using a set for each graded partition according to embodiments of the present invention; and

Figure 5 depicts an indiscernibility relation for use in embodiments of the present invention.

With the increasing volume of data generated by online systems (internet logs, transaction records, communication records, transport networks, sensor networks, etc.) there is a clear requirement for machine assistance in filtering, fusing and finding causal and other relations in data flows. Broadly speaking, these (and similar) tasks form the core of data analytics. A key feature in enhancing human understanding of large scale data is the notion of summarisation. By combining many values (or objects) into a few entities, concise summaries enable analysts to gain insight into bulk patterns and focus on the mechanisms underlying relations in the data, enabling greater understanding of current data and prediction of future data. An important aspect of any automated method to generate such summaries is the ability to produce answers quickly. Distributed methods accomplish this by splitting large tasks into many smaller tasks and combining the results, ideally without requiring significant extra time.

The specific focus of this invention is in summarising sequences of events and activities. A high level summary such as "most senior financial and admin staff repeatedly access a small number of secure systems for short periods during a typical working day" can be expanded in a number of ways - for example, by giving a more detailed breakdown of employee roles, the systems accessed, the length of time and intervals between access events, etc.

In a collaborative intelligent system, machines are used to process large volumes of data and present results to human analysts (who, in turn, can perform additional processing and evaluation as well as generating further tasks for machines). There is a fundamental difference in the knowledge representations used by the different "components" of a collaborative intelligent system. Machine processing is usually centred on well-defined entities and relations, ranging from the flat table structures of database systems through graph-based representations and extending to ontological approaches involving formal logics. On the other hand, human language and communication is based on a degree of vagueness and ambiguity that leads to an efficient transmission of information between humans without the need for precise definition of every term used. Even quantities that can be measured precisely (height of a person or building, volume of a sound, amount of rainfall, colour of an object, etc.) are usually described in non-precise terms such as tall, loud, quite heavy, dark green, etc. More abstract properties such as beautiful landscape, delicious food, pleasant weather, clear documentation, corporate social responsibility, are essentially ill-defined, whether they are based on a holistic assessment or reduced to a combination of lower-level, measurable quantities. Zadeh's initial formulation of fuzzy sets (L. A. Zadeh, "Fuzzy Sets," Information and Control, vol. 8, pp. 338-353, 1965) was inspired primarily by the flexibility of definitions in natural language. He argued that most natural language terms (or concepts) admit "graded membership", in that it is possible to compare two objects and to say whether or not one belongs more strongly than another to the concept. Clearly in the case of an elementary quantity such as height, we are generally able to say that one person satisfies the concept "tall" better than another (or that they satisfy the concept equally well). Such gradation can be confirmed by measurement, if necessary. However, it is also valid to speak of graded membership in the case of more complex concepts such as pleasant weather, clear documentation and others listed above. We can generally rank the membership of different objects in the set representing the concept extension - in other words, the concept extension can be modelled as a fuzzy set. The interval [0, 1] is a convenient range for the membership function. It maps naturally to a scale where definite membership can be represented by 1, non-membership by 0, with intermediate values used to reflect the lack of a precise border between the two extremes.

In addition to the use of flexible terms, human reasoning is characterised by an ability to switch between different levels of granularity when dealing with a problem - for example, IT systems might range from company-wide, business-critical systems to other which are used by one or a few individuals and are of low-importance. Similarly, employee roles in a company might be split at a broad level into managerial, financial/admin, technical and customer-focused. Within each category, there may be further sub-divisions. The invention described here is a convenient way to represent hierarchical categorisation, with the degree of granularity controlled by a fuzzy membership.

Categorisation and clustering are central to data analytics, by identifying meaningful subsets of data that have indiscernible values. Categorisation enables "drill-down" approaches, although in most cases, such approaches operate on two levels only - the cluster or summary, and the data or individual object. The notion of indiscernibility (or similarity) is fundamental to clustering and summarisation, since a cluster is a group of values (or objects) that are regarded as identical from the perspective of the task under consideration. We view indiscernibility as a graded notion, which can be satisfied to a greater or lesser degree. Human language and communication make widespread use of the idea that objects are similar to a greater or lesser extent. As mentioned above, language is based on a degree of vagueness and ambiguity. One advantage of using terms without precise definition is efficiency in imparting the quantity of information required - humans are adept at selecting the appropriate level of detail when communicating (for example, "go nearly to the end of the road and turn left just after a coffee shop, then turn sharp right as soon as you pass a tall office block").

Standard techniques for processing data by machine are not generally suited to the idea of graded predicates. Machine processing is usually centred on well-defined values or ranges of values. Many methods for data analysis rely on crisp (or hard) clustering into mutually exclusive partitions. Statistical approaches and machine learning algorithms often rest on the notion that data can be partitioned by means of necessary and sufficient conditions.

Arguably, similarity is one of the most important aspects of human perception and reasoning - it enables humans to disregard individual entities and concentrate on classes of entities. In addition to reducing the complexity of reasoning, the use of such classes assists in handling unknown cases, where the most "similar" previous case(s) can be used as guidance. We use the terms similarity and indiscernibility interchangeably here. However, we note that the notion of indiscernibility is not absolute - it depends strongly on the accuracy with which values are known and the degree of difference which is acceptable in the definition of "equivalent" values. To take a simple example, running times for films can be measured to the nearest second, yielding sets (equivalence classes) of films that have the same running times. Each film defines an equivalence class of films which can't be distinguished from one another by using the running time attribute. A smaller number of larger equivalence classes would result from measuring running time to the nearest minute. At a different level of indiscernibility, a TV scheduler who must start films on the hour or half-hour would regard two films with running times of 65 and 85 minutes as equivalent, since both would require a 90-minute slot.

The notion of indiscernibility is related to the notion of granularity of categories. It is a naturally graded (or fuzzy) concept if we do not have a precise definition for the difference which makes two values discernible from each other. We can regard clustering and other methods of grouping into categories (such as tolerance relations) as a relaxation of the requirement for values to be identical, accepting approximate equality. Note that that there are two possibilities here - we can define or derive a set of reference categories and determine the membership of each object in these reference categories; alternatively, we can use each individual value as the basis of a category. In the first case, reference categories could be defined by human expertise or by a standard clustering method.

We note that when equivalence classes are defined in terms of the degree of discernibility, they are naturally fuzzy (or graded) and also naturally hierarchical, in that elements that are indiscernible at a given granularity (e.g. to the nearest second in the example above) are also indiscernible at coarser granularities (e.g. to the nearest minute or half hour). The granules (or equivalence partitions) form a strict taxonomy, or tree structure.

Embodiments of the present invention are concerned with representation and identification of multiple intermediate granular categories (or equivalence classes), with increasingly fine granularity.

## Tolerance Relations and Equivalence

The mathematical definition of an equivalence class arises from a relation defined on a set S, that is:

- reflexive - that is, every element of S is related to itself
- symmetric - that is, if an element X is related to a different element Y, then Y is also related to X
- transitive - for three elements X, Y, Z, if X is related to Y and Y is related to Z then X is related to Z

A relation that satisfies the first two conditions (reflexive and symmetric) is known as a tolerance relation. Indiscernibility gives rise to a tolerance relation, since it is not necessarily transitive. For example, if we consider values to be indiscernible if they differ by no more than 1, then 99 and 100 are indiscernible, as are 100 and 101. However, 99 and 101 are discernible. The transitive closure of a tolerance relation is an equivalence relation (the transitive closure is formed by adding pairs of elements X,Z when X,Y and Y,Z satisfy the relation - in the example above, we have (99,100) and (100, 101) in the relation so we must add (99,101) to form the transitive closure. The pair (99, 101) is linked because neither value is discernible from 100).

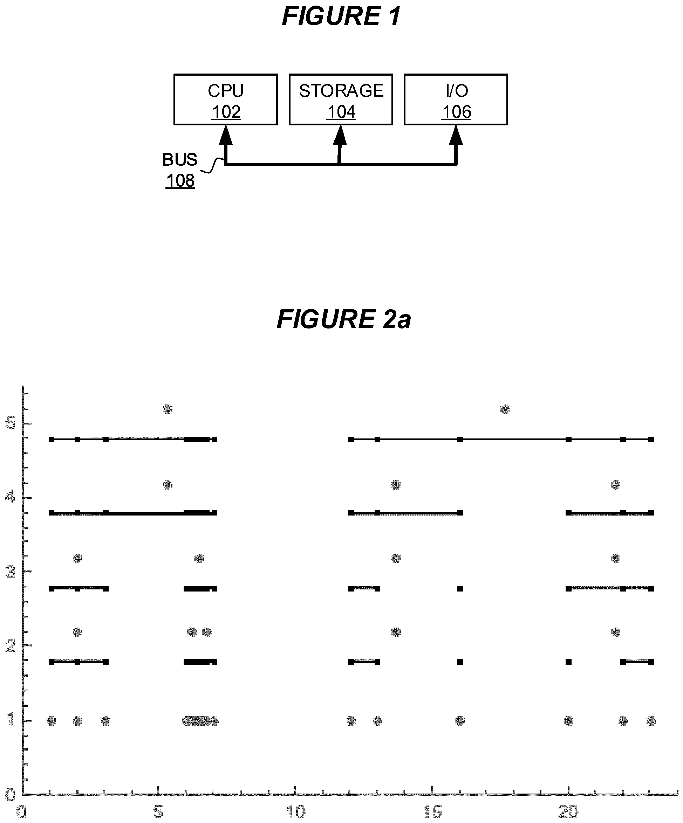

In many cases, a tolerance relation is a more useful structure than an equivalence class for data analytics. If we are given a set of values and some cluster centres, we naturally obtain an equivalence partition by assigning each data point to its nearest cluster centre. If, on the other hand, we wish to avoid the overhead of clustering and the need to specify the number of cluster centres, we can use a tolerance relation based on the indiscernibility of data values. Figure 2a illustrates exemplary tolerance classes and clusters including a simple case where we have a set of values in the range 0-24.

These are shown at y=1. The square points and lines show tolerance groups for different tolerance thresholds (2,3,4,5) i.e. we regard as indiscernible any pair of points differing by an amount less than or equal to the threshold. The circular points mark cluster centres using a standard squared distance algorithm for 5,4,3 and 2 clusters. Although we can see a correspondence there is no fundamental relation between the two approaches.

A tolerance relation is sensitive to outliers in the data and can lead to lack of discrimination - taking an extreme case, if we have evenly spaced values (1, 2, ..., n-1, n) then we have either n tolerance classes (if the discernibility threshold is < 1) or a single tolerance class (if the threshold is 1 or greater). Standard clustering approaches also lead to somewhat arbitrary results in such cases and give results that are highly dependent on the number of clusters.

## Fuzzy Sets

Fuzzy set theory typically models degree of membership by assigning a number between 0 and 1, where 1 represents full membership and 0 represents non-membership of the category - in this case, a (granular) group of objects. We regard membership as qualitative, rather than quantitative, and we do not require precise membership levels - just the capacity to judge whether one value has a greater or lower membership compared to other values in the category or compared to an externally defined membership level. For instance, if we choose a group of employees who "are highly-paid, experienced and have significant managerial responsibility", it may be more useful to establish that a satisfies the conditions completely, b to a strong degree and c to a much lower degree than to judge that employees a, b, c have membership 1, 0.8, 0.4, respectively. However, in order to record, compare and manipulate membership values, it is often necessary to use a numerical scale (or similar).

The notion of membership grade is applicable both to numerical domains and categorical / non-numerical domains. In the first case, an attribute can take values in a continuous or discrete range - for example, room size measured in square meters can be any positive real number, whereas room capacity measured in number of seat/desks/ etc. is also a positive number, but must be an integer value. In these cases, membership grade and degree of discernibility arise naturally by considering numerical differences.

In the second case, where we do not have an underlying numerical scale, it is still possible to define membership-based categories based on attributes. The location of a building could be categorised into rural, semi-rural, urban-residential, urban-commercial, urban-retail, etc. or its main function could be office space, storage (such as a spare part depot), retail space, electronic equipment (such as exchange or computer hardware), etc. It is possible to devise objective measures for determining membership of buildings in these categories.

According to embodiments of the present invention, there is provided a novel approach to extracting tolerance clusters from data values where we have a graded notion of indiscernibility between the values. Additionally, we assume that a small set of membership levels is defined, at which the tolerance clusters are to be determined.

In some embodiments there is provided some or all of:

- given a graded definition of discernibility on a domain, creation of a uniformly structured tree of sets partitioning the values considered equivalent at each discernibility grade. These sets can be used for further calculation (taking account of the graded discernibility), with efficiencies in many cases arising from the reduced notation as this facilitates incremental calculations;

- the partition sets of equivalent values are monotonic, that is to say any values which are considered equivalent at a specific grade of discernibility are also classed as equivalent at any lower grade of discernibility;

- the compressed representation can be modified incrementally as new values are added and is not affected by the order in which values are presented. It can be run as a single process, or as any number of separate processes with the overall representation found from a combination of the individual process outputs;

- the uniform representation allows summarisation and other processing to be performed efficiently at potentially multiple levels of granularity, in some cases requiring little additional processing compared to the normal case. The multi-level approach can be regarded as a form of sensitivity analysis with respect to assumptions used in clustering;

- the ability to handle discernibility across multiple (heterogeneous) data dimensions.

Clustering is a technique used in data analysis, data mining and machine learning. Introductory texts exist in these areas describing the common approaches - for example: "Computational Intelligence - A Methodological Introduction" (Rudolf Kruse et al, Springer ISBN 978-1-4471-5012-1); "Introduction to Information Retrieval" (C D. Manning et al Cambridge University Press. ISBN 978-0-521-86571-5);

Hierarchical clustering with single linkage is used to form groups of values. It requires a distance metric, i.e. one that is reflexive, symmetric and obeys the triangle inequality. Typically, it is used to cluster a single dimension. Embodiments of the present invention differ in that tolerance relations are used (reflexive, symmetric) to accommodate data with multiple, possibly heterogeneous, attributes (including categorical and numerical) as long as an indiscernibility relation is defined. Additionally, hierarchical clustering ultimately groups everything together. Use of a fuzzy indiscernibility relation enables a definition that will never group elements together if they are always discernible.

In general, conventional approaches rely on data being represented as numerical values with an underlying ordering so that distance can be measured between data points. Where data is not in the required numerical form it is converted into a numerical form. Most methods for data analysis rely on crisp (or hard) clustering into mutually exclusive partitions. Machine learning algorithms and other statistical approaches often rest on the notion that data can be partitioned by means of necessary and sufficient conditions.

Whilst it is possible in some cases to create crisp, well-defined clusters, a number of approaches have been proposed to overcome the restriction and two approaches to "soft" clustering can be distinguished. In fuzzy approaches, such as "fuzzy c-means", the idea of mutual exclusivity is abandoned and objects are allowed to belong to more than one cluster. At a given membership level, an object may be a member of more than one cluster, exactly one cluster, or no cluster at all. Clearly this is incompatible with any analysis algorithm that requires mutually exclusive partitions. The second approach to soft clustering treats partial membership in a probabilistic fashion (e.g. expectation-maximisation, Gaussian process models). Here, the soft clusters can be converted to hard clusters by assigning an object to a cluster with probability derived from its "membership". However, if the clusters are used for further processing, the usual consequence of the probabilistic approach is to require calculations to be repeated multiple times, in order to estimate a distribution over the answers.

Formal concept analysis (FCA) can be used to categorise objects on the basis of multiple attributes. Here, we focus on a single attribute or a compound attribute formed from single components, so the notion of FCA is not applicable.

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random-access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Embodiments of the present invention will now be described. In a table of values, it is beneficial to form a compressed representation by grouping some values together. For example, this allows us to talk about films by genre, budget, runtime, etc. without having to list all examples. We use a graded definition of discernibility between values and derive groups of values that are indiscernible at a defined set of membership grades. At each membership grade the groups partition the set of values (that is, any value belongs to exactly one group), and as membership grade varies the groups form a nested hierarchy - that is, values grouped together at a given membership grade are grouped together at any lower membership grade.

The compressed representation is useful for presenting results in summary form, for visualisation with the ability to refine or coarsen the level of granularity, evaluation of associations at multiple granularities, exploration of predictive models, among others. In association with other techniques this can be used to analyse and summarise relations (predictive functions, associations, visualisations) in a consistent way across different attributes. It can also be used as a starting point for more sophisticated data analysis techniques such as formal concept analysis (FCA) and for combining cluster centres in a consistent manner.

The compressed representation can be modified incrementally as new values are added, and is not affected by the order in which values are presented. It can be run as a single process, or as any number of separate processes with the overall representation found from a combination of the individual process outputs

Embodiments of the present invention are effective for categorical and numerical (discrete or continuous) variables and are data-driven to creates groups of indiscernible values (at requested grades of discernibility). Whilst these groups could be used to derive a partition of the entire domain, a purpose is to partition values in the data so that standard algorithms (requiring partitioned data) may be applied within a fuzzy framework. Where incremental versions of such algorithms exist, embodiments of the invention allow efficient extension to the fuzzy case by avoiding repeated calculations at different membership grades.

Embodiments of the present invention are applicable, inter alia, to systems that involve grouping any set of discrete entities (IP Addresses, computer systems and services, buildings, products, times, dates, employees, etc.) into related categories, where it is necessary to operate at different levels of granularity - e.g. initially we split into broad groups, and subsequently sub-divide these as part of a "drilling down" procedure. This could be useful in identifying anomalous cases (e.g. anomalies in network security data).

**Inputs**

    1. A specification of the universal set of values - either as an explicit list or as some means of generating values such as a recursive definition or by restriction of an existing set. Examples :

- the set of numbers {1,2,3,4,5,6},
- the set $N=\{0\}$ $\{x+1|x\ N\}$ N = {0} u {x+1 | x e1 N}, i.e. the set of positive integers
- the set $P_{10}$ = {$(x,y)|0{\leq}x{\leq}10$, $0{\leq}y{\leq}10$, $x\ R,y\ R$} i.e. pairs of real numbers each in the range [0,10]

    2. A graded (fuzzy) indiscernibility (similarity) relation between items in the universal set such as values - more specifically, a method to establish whether one value is within a specified discernibility threshold of another value (where the discernibility threshold arises from the degree of discernibility required). Again, this may be by means of a table, algorithmic decision process or mathematical formula which can be evaluated to give a Boolean value. The algorithmic and algebraic version can be regarded as intensional definitions, computing table values on demand.

For any pair of values, x, y, and membership grade or level $\alpha$, we can determine whether or not x and y are indiscernible at membership level $\alpha$.

3. A finite set of membership levels at which tolerance classes are required. Note these levels may be predefined by an analyst or they may emerge naturally from the data.

It is assumed that the membership level, $\alpha$, lies in the range $0 < \alpha \leq 1$ and is commensurate with other membership scales used in the analysis. For a description of commensurate membership scales, see unpublished European patent application EP16202205.7 a copy of which is annexed hereto and filed contemporaneously herewith. The membership levels are placed in a list of increasing order so that a membership level may be represented as an index showing its position in the list. Representing membership level as an integer is generally more compact and avoids rounding errors sometimes associated with floating point numbers. The use of ordered indices rather than actual memberships emphasise the notion that we are more concerned with the relative degree (of indiscernibility) than with absolute memberships.

**Output**

A discrete fuzzy set of nested (hierarchical) classes partitioning the data. The classes increase monotonically as lower membership levels are considered and can be conveniently represented as a tree structure (see below).
By way of example, we will use the data in Table 1 which shows similarities (indiscernibility) for a set of objects b0 - b9. The predefined set of membership levels is {0.2, 0.5, 0.8 and 1} and the memberships have been rounded to the next lowest predefined value. For example, a membership of 1 in the table means that the two values are indiscernible at all thresholds; a membership greater than 0 means they are indiscernible for any threshold up to and including a given value. determined by a fuzzy definiiton of indiscernibility.

**Table 1** - **indiscernibility relation for a discrete set**

| | b0 | b1 | b2 | b3 | b4 | b5 | b6 | b7 | b8 | b9 |
|---|---|---|---|---|---|---|---|---|---|---|
| **b0** | 1 | | | | | | | | | |
| **b1** | 0.5 | 1 | | | | | | | | |
| **b2** | 0 | 0 | 1 | | | | | | | |
| **b3** | 0 | 0 | 0 | 1 | | | | | | |
| **b4** | 0 | 0 | 0 | 0.2 | 1 | | | | | |
| **b5** | 0 | 0 | 0 | 0.2 | 0.2 | 1 | | | | |
| **b6** | 0 | 0 | 0 | 0.2 | 0.2 | 0.5 | 1 | | | |
| **b7** | 0 | 0 | 0 | 0.2 | 0.2 | 0.5 | 0.8 | 1 | | |
| **b8** | 0 | 0 | 0 | 0 | 0 | 0 | 0 | 0 | 1 | |
| **b9** | 0 | 0 | 0 | 0 | 0 | 0 | 0 | 0 | 0.8 | 1 |
| | **b0** | **b1** | **b2** | **b3** | **b4** | **b5** | **b6** | **b7** | **b8** | **b9** |

The nested fuzzy tolerance classes can, for example, be represented as a tree data structure, where each node contains:

(i) a base set of zero or more elements or values (see below);

(ii) a set of zero or more child nodes;

(iii) a discernibility index - an element of the set of membership levels, represented by its position in the ordered list (lowest membership to highest);

(iv) a link to the parent node - because this is a tree, each node (apart from the root node) has exactly one parent;

(v) flags indicating whether (i) is intensional or extensional and whether a total set or reduced set representation is used (i.e. the base set contains all elements or just the elements or values associated specifically with this membership grade), also whether it is discrete or continuous.

Note that at least one of the set of values (i) and the set of nodes (ii) must be non-empty. The root node needs only a list of its children; for convenience, it can also hold a record of the domain.

A fuzzy set consist of a mapping from elements to membership grades. We can alternatively view a fuzzy set as a mapping from membership grade to a crisp set (see, for example, T. P. Martin, "The X-mu representation of fuzzy sets," Soft Computing, vol. 19, pp. 1497 - 1509, 2014/05/31 2015 and G. J. Klir and T. A. Folger, Fuzzy Sets, Uncertainty, and Information: Prentice-Hall International Editions, 1988). It should be noted that the crisp sets are nested in that a set at a particular membership level is contained in all sets derived from lower membership level. For a finite number of membership grades, this allows us to represent a fuzzy set in one of two ways :

(i) reduced (or partial) notation, where we list or specify only the elements belonging to a set at a given membership grade and not to any set at a lower membership grade.
(ii) Full notation, where we list every element at each membership grade

For example, taking the set $S = \{a/1, b/0.7, c/0.2, d/1, e/0.5\}$ and the set of membership levels $L = \{1, 0.8, 0.5, 0.2\}$, we have:

$$S_1 = \{a, d\}$$

$$S_{0.8} = \{a, d\}$$

$$S_{0.5} = \{a, b, d, e\}$$

$$S_{0.2} = \{a, b, c, d, e\}$$

in full notation or

$$S_1 = \{a, d\}$$

$$S_{0.8} = \phi \quad S_1$$

$$S_{0.5} = \{b, e\} \quad S_{0.8}$$

$$S_{0.2} = \{c\} \quad S_{0.5}$$

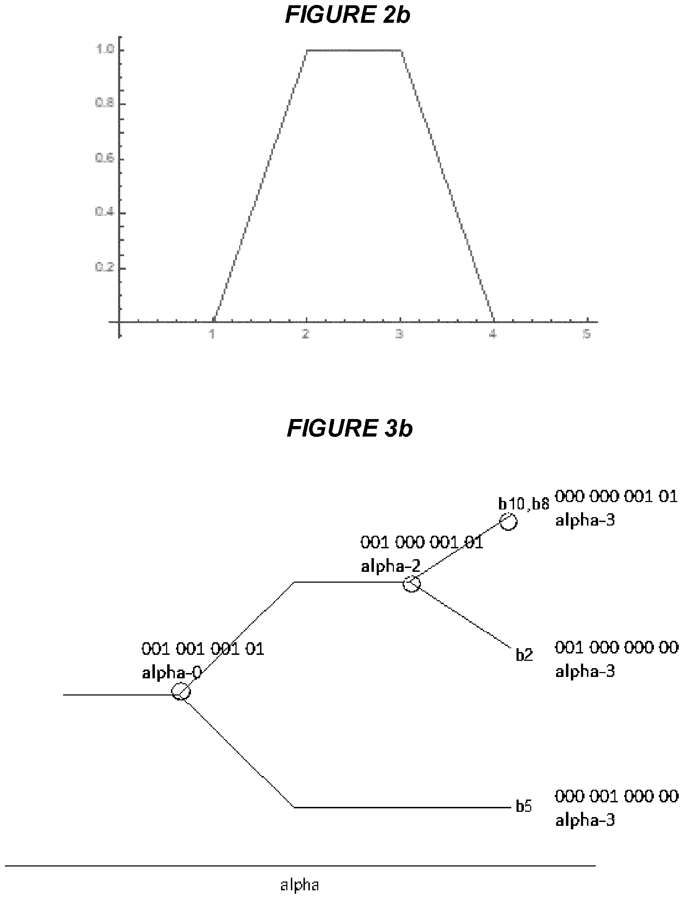

in reduced notation, where $S_\alpha$ is the set of elements with membership $\alpha$ or greater. The advantage of the reduced notation arises when performing operations whose complexity is proportional to set size, and the operations need to be repeated over some or all grade sets (alpha cuts). For example, finding the number of elements in the sets at each level is less complex in reduced notation as it avoids repeated counting. On the other hand, for a fuzzy subset of a continuous universe such as the example in Figure 2b and the same set of grades, the full notation of the alpha cuts is:

$$S_1 = [2, 3]$$

$$S_{0.8} = [1.8, 3.2]$$

$$S_{0.5} = [1.5, 3.5]$$

$$S_{0.2} = \begin{bmatrix} 1.2, 3.8 \end{bmatrix}$$

where *[x, y]* denotes the interval from x to y. The reduced form is

$$S_1 = \begin{bmatrix} 2, 3 \end{bmatrix}$$

$$S_{0.8} = \begin{bmatrix} 1.8, 2 \end{bmatrix} \quad \begin{bmatrix} 3, 3.2 \end{bmatrix} \quad S_1$$

$$S_{0.5} = \begin{bmatrix} 1.5, 1.8 \end{bmatrix} \quad \begin{bmatrix} 3.2, 3.5 \end{bmatrix} \quad S_{0.8}$$

$$S_{0.2} = \begin{bmatrix} 1.2, 1.5 \end{bmatrix} \quad \begin{bmatrix} 3.5, 3.8 \end{bmatrix} \quad S_{0.5}$$

Here, an operation such as calculating the length of the interval (analogous to the number of elements in a discrete set) is less complex using the full notation.

For efficiency, embodiments of the present invention can use, by way of example, one of three different conventions to represent sets, depending on the nature of the underlying data and the calculation to be performed.

In the case of discrete sets of categorical values without an obvious way to generate successive elements (for example, a list of names), a bit vector representation can be used. That means all elements must be enumerated in some canonical order, allowing a value to be replaced by an index in the canonical order. Assuming there are n elements, any subset can be represented as a vector of bits, where 0 or 1 in position i indicates that the $i^{th}$ element in the canonical order is missing or present respectively. For example, if the universe is (a, b, c, d, e, f) then the subset {a, c, d} is represented as the bit vector 101100. This representation allows very efficient set operations such as intersection. The computation required is dependent on the size of the universe, not on the size of the set.

In the case of discrete values where the underlying universe is effectively infinite (for example) a set of integers representing elapsed time as a whole number of seconds since some arbitrary starting point) it is generally not feasible to adopt a bit vector representation. If there is no underlying pattern to the members of the set, they can be listed individually. Computations on such sets depend on the number of elements within the set; in such cases, we store only the elements belonging specifically at this grade of discernibility and rely on the set inclusion to list elements at lower grades of discernibility. In this case, it is also advantageous to record an inverse map, showing, for each element, the reduced partition set containing that element.

In the case of an intensional definition (e.g. a mathematical specification or a method to generate elements) the set can be represented by a restriction of the intension (again, this can be a declarative specification or an algorithmic/software method). For example, if the underlying domain is a set of integers representing time as a whole number of seconds, then a set representing a time interval might be *{x | t0 < x <= t1}* where t0 and t1 are limits such that t0 < t1 and it is understood that x is an element of the domain. Similar cases arise with continuous underlying domains (such as the set of real numbers or some subset thereof. In such cases, computations may or may not be dependent on the size of the set. For example, interval arithmetic involving just the end points of the interval is independent of the size of the interval.

These representations are summarised in Table 2.

**Table 2** - **summary of representations used for base sets**

| Type of underlying Domain | Definition of Domain | Representation of domain | Representation of partition sets | Algorithm to extend a tree of partition sets with a new value |
|---|---|---|---|---|
| discrete | extension | list | bit vector - full set at each node | Algorithm 1 |
| discrete | intension | algorithm or specification | list - partial set at each node | Algorithm 2 |

(continued)

| Type of underlying Domain | Definition of Domain | Representation of domain | Representation of partition sets | Algorithm to extend a tree of partition sets with a new value |
|---|---|---|---|---|
| continuous | intension | algorithm or specification | algorithm or specification - full or partial version at each node | Algorithm 1 (full set) or 2 (partial set) with appropriate set operations |

The partition sets are constructed incrementally, by extending an existing tree of sets with a new value, considering its indiscernibility from each value already in the tree. Two algorithms are presented, one for the full set representation and the second for the partial set representation.

**Algorithm 1** - **to update a tree represented using a set for each graded partition**

Starting from the tree defined by pre-requisites (2) and (3) and a discrete set of membership levels, L, we add a new value (with known similarities to each element of the existing tree) as follows:

1. Form a single set from the similarities of the new value to each value already in the tree. This is (effectively) a single branch of a tree, referred to as the branch below

2. Set current tree-node to the root, and current branch node to the first (lowest membership grade) node in the new branch.

3. Consider the base set of the current node and each child node (these may not necessarily be at the same discernibility membership grade). Checking for overlap is a bitwise AND operation. The bit vector for a base set can be stored separately or calculated as a bitwise AND between a node bit vector and the complement of the union of its child sets

4. Repeat until a terminating condition is met (this may not necessarily be at the lowest discernibility membership grade)

```
   IF no set (child or base) overlaps with the current branch node
 set, THEN
        add current branch node as child of current tree-node
        set terminating condition to true
   ELSE IF a single set (child or base) overlaps with the current
   branch node set, THEN
        add new element to the overlapping set
        set current tree-node to this set
   ELSE (if multiple sets overlap)
        merge the nodes into a single child node with union of sets and
 the branch node, membership grade = branch node membership grade
        set current tree-node to the new child node
   ENDIF
   IF branch node has a child node, THEN
        set current branch node to its child node
   ELSE
        set terminating condition to true
   ENDIF.
   END
```

**Example 1**

Consider adding a new row to the indiscernibility grades listed in table 1.

**Table 3 - Indiscernibility grades for a new element b10, to be added to Table 1**

| b10 | 0 | 0 | 0.8 | 0 | 0 | 0.2 | 0 | 0 | 1 | 0 | 1 |
|---|---|---|---|---|---|---|---|---|---|---|---|

(continued)

| | b0 | b1 | b2 | b3 | b4 | b5 | b6 | b7 | b8 | b9 | b10 |
|---|----|----|----|----|----|----|----|----|----|----|-----|
| | | | | | | | | | | | |

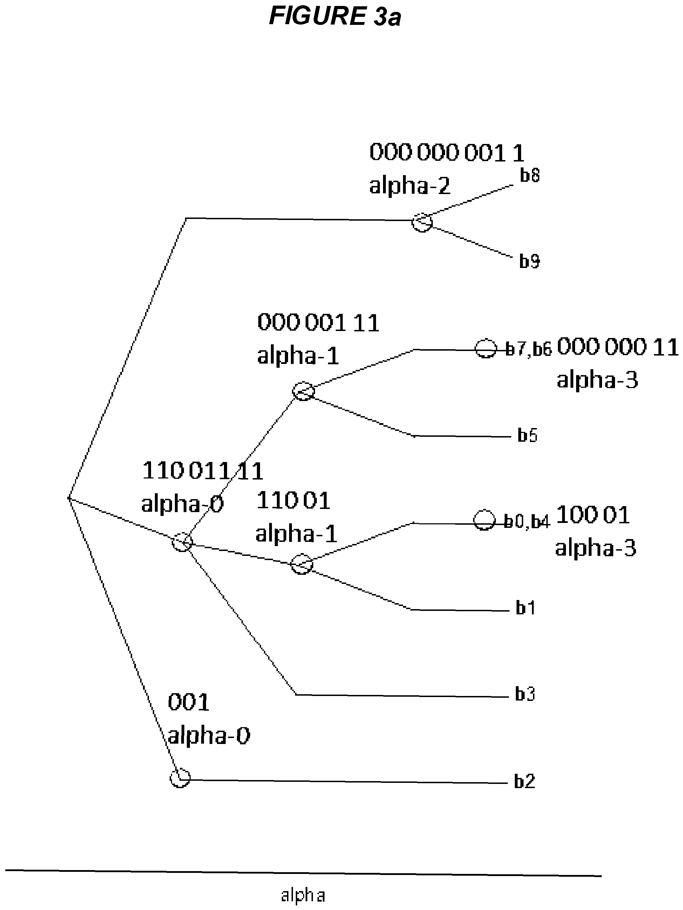

Figures 3a to 3f illustrate the operation of Algorithm 1 in this example.

Figure 3a depicts an initial representation of discernible partitions from Table 1 using the full set bit-vectors. The discernibility membership levels are {0.2, 0.5, 0.8, 1.0}, represented respectively as alpha-0, alpha-1, alpha-2, alpha-3 here. Stored nodes are shown as circles. The corresponding partition sets are:

alpha-3 : {b0,b4}, {b1}, {b2}, {b3}, {b5}, {b6,b7}, {b8},{b9}

alpha-2 : {b0,b4}, {b1}, {b2}, {b3}, {b5}, {b6,b7}, {b8,b9}

alpha-1 : {b0,b1,b4}, {b2}, {b3}, {b5,b6,b7}, {b8,b9}

alpha-0 : {b0,b1,b3,b4, b5,b6,b7}, {b2}, {b8,b9}

Figure 3b depicts the full set bit-vector representation of a new element (b10) - tree formed from its discernibility grades (table 3).

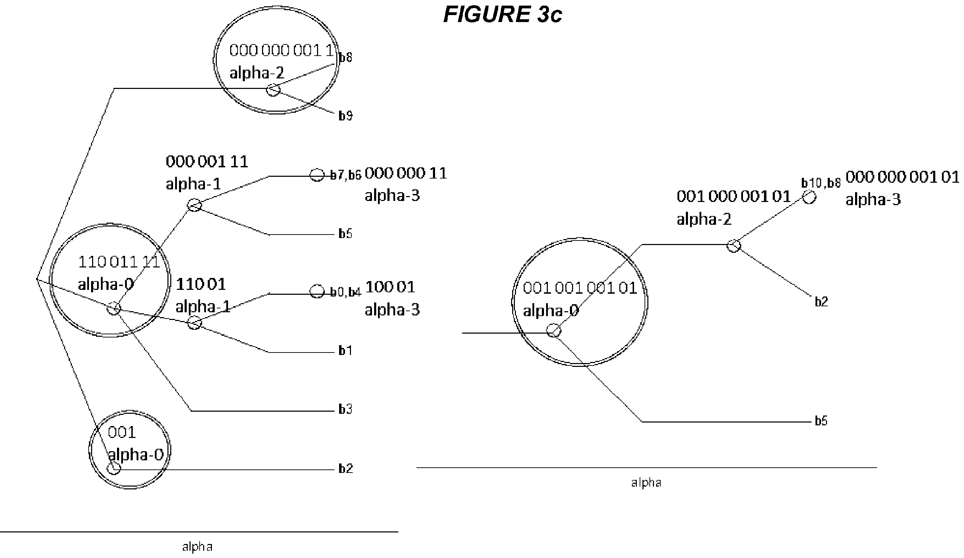

Figure 3c depicts adding a new element (b10) by merging the tree formed from its discernibility grades (Table 3). The logical "AND" is found of the bit vector from first node of tree to be added (001 001 001 01) with each descendant of the root node. Matches (non-zero results) are circled. All matching nodes are linked at alpha-0, the bit vector of the merged node is the union of bit-vectors from all matching nodes.

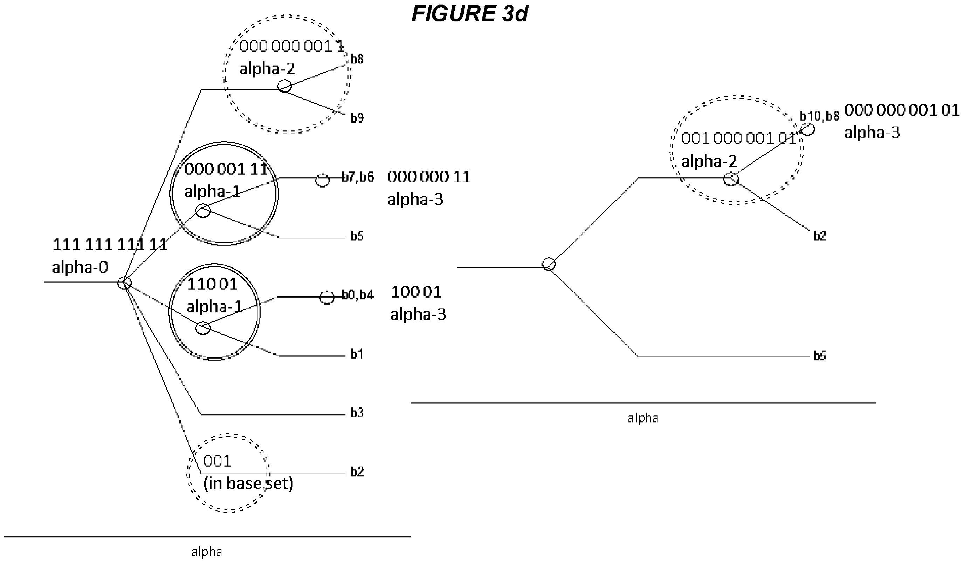

Figure 3d depicts applying a logical "AND" of the bit vector from a next node of the branch to be added (001 000 001 01) with each descendant of the current tree node. Matches are shown in dotted circles. Link all matching nodes at alpha-1, bit vector is union.

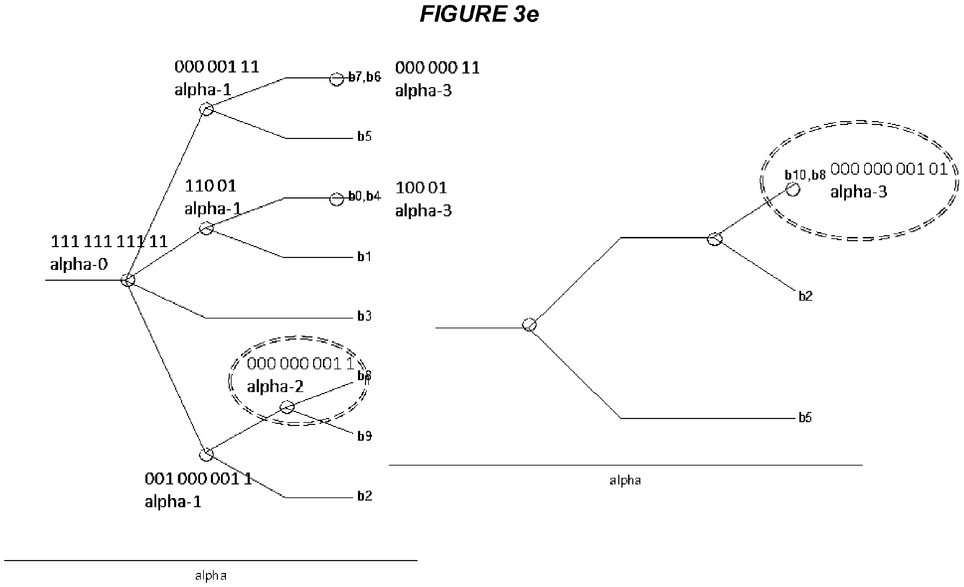

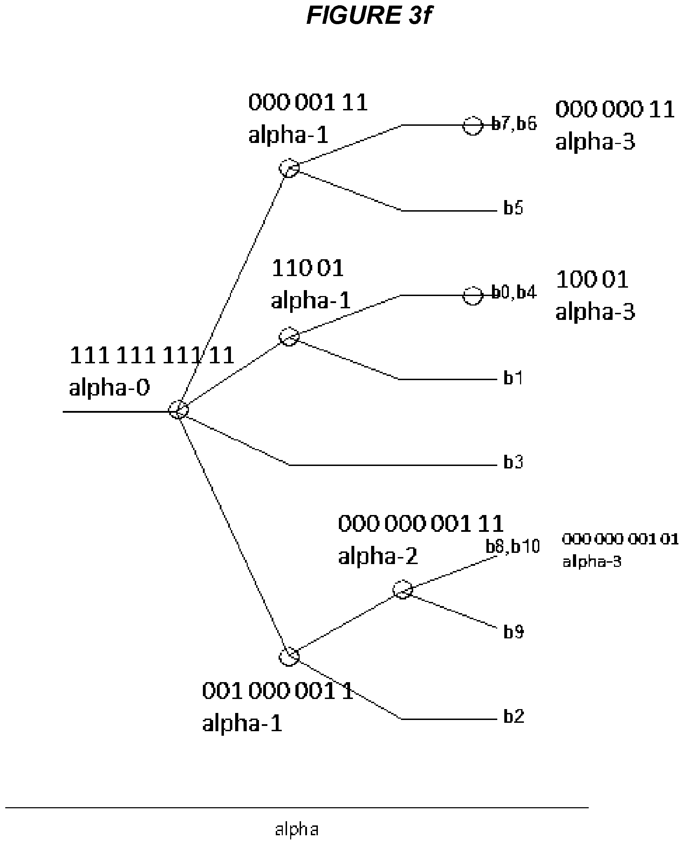

Figure 3e depicts the final step in which a logical "AND" is performed of the bit vector from a next node of the branch to be added (001 000 001 01) with each descendant of the current tree node. Matches are shown in broken circles. All matching nodes are linked at alpha-1, bit vector is union. The result of the updated tree of partitions is illustrated in Figure 3f.

**Algorithm 2** to update a tree represented using partial sets for each graded partition

For each non-zero discernibility membership grade $\alpha_{ij}$ in row j of the table, i=1, ..., j-1

n(i) denotes the tree node containing element i (unique)

n(i).base denotes the base set of elements associated with this node

n(i).child denotes the child node(s) associated with this node

n(i).alpha denotes the discernibility index associated with this node

n(j) denotes the tree node containing element j (it is not necessary to look this up every time, since element j is fixed for the iteration)

tree nodes are also accessible by discernibility index, so that for each discernibility index (membership grade in L) we have a list of nodes with that discernibility index. This is denoted nodeList() below. It is assumed that new nodes are added to the appropriate nodeList when created.

| (right) test *n (j)* (below) test *n (i)* | null (*j* not yet processed) | $\alpha_{ij}$ = n(j).alpha | $\alpha_{ij}$ < n(j). alpha | $\alpha_{ij}$ > n(j). alpha |
|---|---|---|---|---|
| $\alpha_{ij}$ = n (i).alpha | Add j to n(i).base n(j) = n(i) | IF n(j) ≠ n(i) THEN combine nodes (and, recursively, parent nodes), ELSE no action needed | IF n(i) is not a descendant of n(j) THEN add n(i) as a descendant of n(j) ELSE no action needed | Add j to n(i).base If necessary add n(i) as a child of n(j) delete j from n(j).base and set n(j) = n (i) |

(continued)

| (right)<br>test *n (j)*<br>(below)<br>test *n (i)* | null (*j* not yet processed) | $\alpha_{ij}$ = n(j).alpha | $\alpha_{ij}$ < n(j). alpha | $\alpha_{ij}$ > n(j). alpha |
|---|---|---|---|---|
| $\alpha_{ij}$ < n (i).alpha | IF *n(i)* has a parent or ancestor at $\alpha_{ij}$ THEN add j to its base set ELSE n(j) = new node with base element j and child = n(i) | IF n(j) is not a descendant of n (i) THEN add n(j) to n(i).child ELSE no action needed | no action needed | IF n(i) has a parent or ancestor at $\alpha_{ij}$ then add j to its base set ELSE Delete j from n(j), reset n (j) = new node with base element j and child = n (i) |
| $\alpha_{ij}$ > nodeOf (i).alpha | n(j) = new node with base element j Add n (j) to n(i).child Add n(j) to nodeListit ($\alpha_{ij}$) Delete i from n(i).base and reset n(i) = n(j) | add i to n(j).base If necessary, add n(j) to descendants of n (i) delete i from n (i).case n(i) = n(j) | IF n(j) has a parent or ancestor at $\alpha_{ij}$ then add i to its base set ELSE Delete i from n(i), reset n(i) = new node with base element j and child = n(j) | Merge ancestor nodes of n(i), n (j) Delete i, j from n (i) base, n (j) base (respectively) n (i) = n (j) = new node with base elements i, j add new node to child set of lowest merged ancestor |

Note - it is possible for tree nodes to become empty during this process, i.e. to have no base elements and no child nodes. Such nodes can be discarded, either at the end of the processing or on-the-fly, as they are detected.

**Example 2**

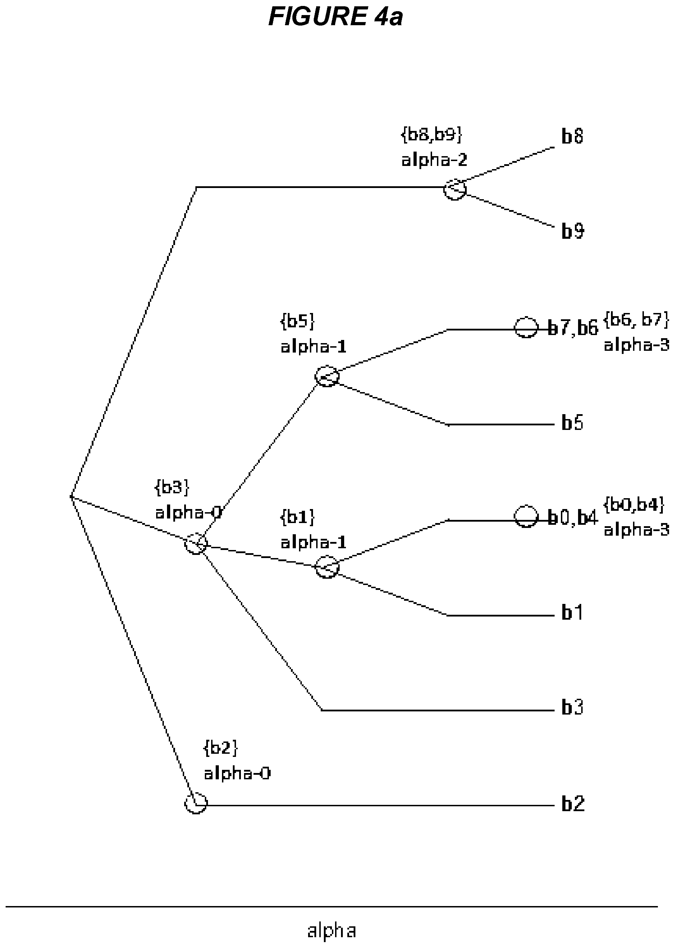

The same data is used as Example 1 but the partial set representation is adopted. This would be appropriate in a case where a very large domain is handled. The application of algorithm 2 is illustrated in Figures 4a to 4e.

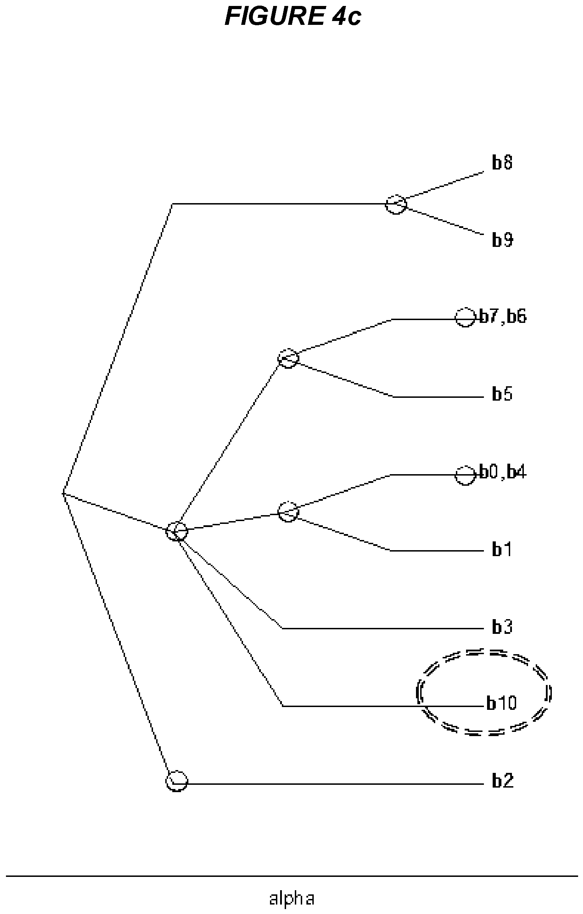

Figure 4a depicts a partial-set representation of discernible partitions from Table 1. Only nodes marked with a circle are stored; base sets (partial) are shown, child sets are indicated by links to lower level marked nodes. In Figures 4c to 4e, changes to the tree of Figure 4a are shown by broken circles.

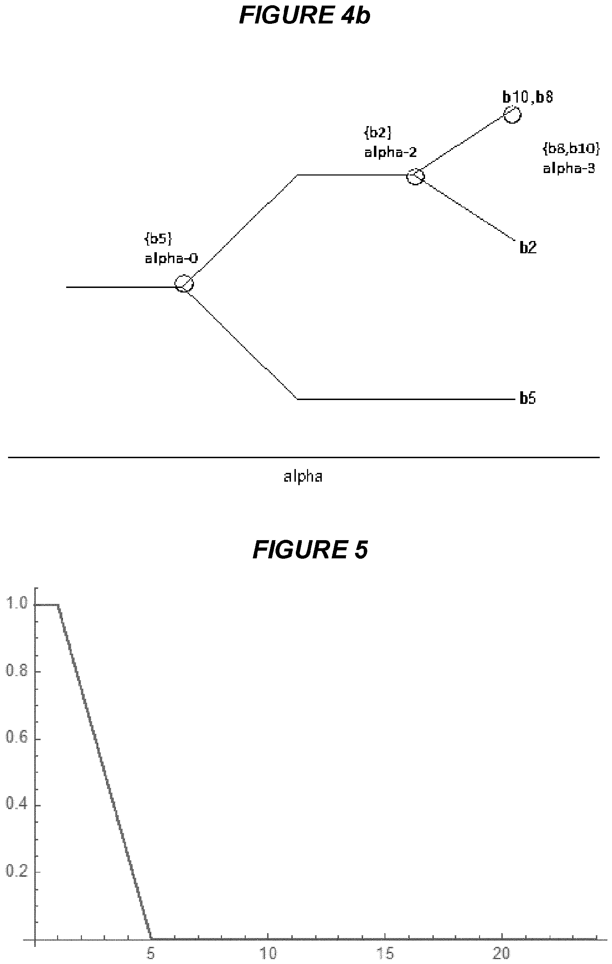

Figure 4b depicts a partial set representation of a new element (b10) with the tree formed from its discernibility grades (Table 3).
Figure 4c depicts an intermediate tree after combination with the first partial node in the added tree, {b5} alpha-0.

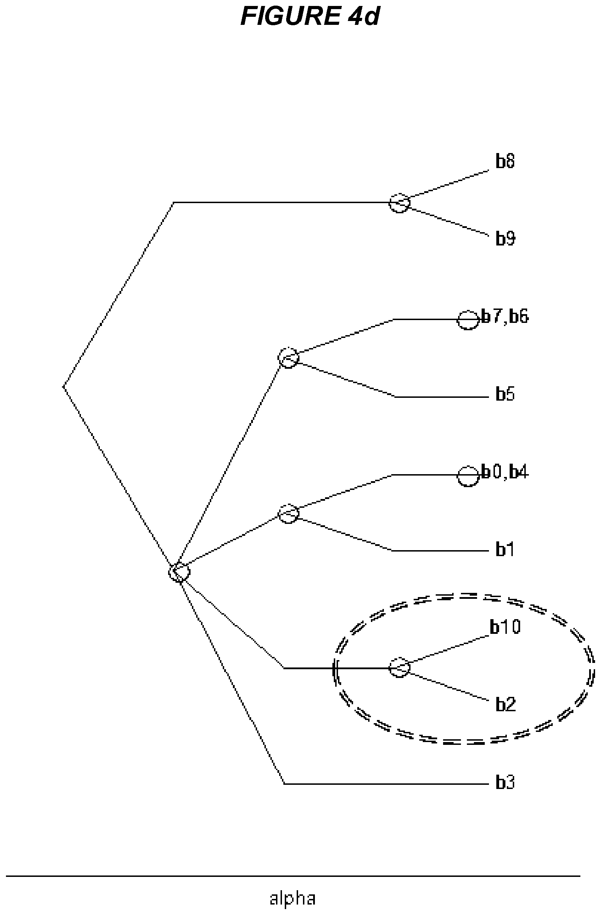

Figure 4d depicts an intermediate tree, after combination with second partial node in added tree, {b2} alpha-2.

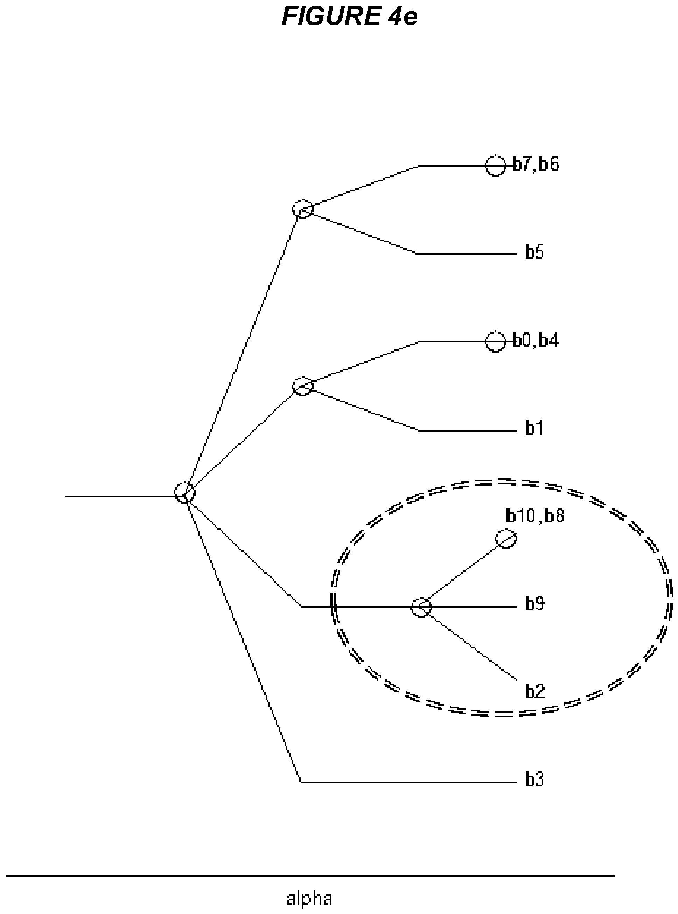

Figure 4e depicts the final tree, after combination with third partial node in added tree, {b8} alpha-3.

**Example 3**

We illustrate the use of symbolic definitions on a continuous domain - in this case, representing time (in hours) on a 24-hour clock, so that the domain is the real interval [0, 24] i.e. the set of real numbe rs greater than or equal to zero, and less than 24.
The indiscernibility relation is defined by

$$\mu_{indisc}\left(t_1, t_2\right) = \min\left(1, \max\left(0, \frac{5 - |t_1 - t_2|}{4}\right)\right)$$

as illustrated in Figure 5.
Figure 5 - Indiscernibility relation for times (in hours). Times differing by one hour or less are always indiscernible (i.e. have indiscernibility membership grade 1), whereas times differing by 5 hours or more are always discernible from each other (indiscernibility membership grade 0).
Using data points {1, 2, 3, 6, 7, 12, 13, 16, 20, 22, 23} and indiscernibility membership grades {0.25, 0.5, 0.75, 1}, the partition sets are the continuous intervals:

$$P_1 = \left\{ [1, 3], [6, 7], [12, 13], [16, 16], [20, 20], [22, 23] \right\}$$

$$P_{0.75} = \left\{ [1, 3], [6, 7], [12, 13], [16, 16], [20, 23] \right\}$$

$$P_{0.5} = \left\{ [1, 7], [12, 16], [20, 23] \right\}$$

$$P_{0.25} = \left\{ [1, 7], [12, 23] \right\}$$

**Multi-dimensional Variant**

Embodiments of the present invention can be extended to more than one attribute, if a multi-dimensional indiscernibility relation is defined. For instance, Indiscernibility of time is defined as in the previous example, and transactions are defined to be always indiscernible if the difference in amount is less than 5% of the larger transaction and never indiscernible if the difference in amount is 10% or more of the larger transaction. NB the membership calculation does not have to be decomposable onto the separate dimensions.

$$\mu_{indisc}\left(v_1, v_2, t_1, t_2\right) = \min\left(\mu_t\left(t_1, t_2\right), \; \mu_v\left(v_1, v_2\right)\right)$$

$$\mu_t\left(t_1, t_2\right) = \min\left(1, \max\left(0, \; \frac{5 - |t_1 - t_2|}{4}\right)\right)$$

$$\mu_v\left(v_1, v_2\right) = \max\left(0, \min\left(1, \; 2 - \frac{|v_1 - v_2| \times 10}{\max\left(v_1, v_2\right)}\right)\right)$$

**Distributed variant**

The algorithms described above calculate the entire set of partitions from an indiscernibility relation. It is also possible to process the relation in a distributed manner by splitting the relation into blocks, forming a tree for each block and then combining the trees using a simple modification of the algorithm above. In this modified version, instead of a single branch to augment the existing tree, we have several branches (i.e. a complete tree). By iterating over the branches the two trees can be combined efficiently.

**Applications**

As shown in the examples, this invention can be used to group values or objects with multiple attributes as long as an indiscernibility relation is defined over the domains. Other possible applications include analysis of system access logs (where time, users, IP destinations and services accessed may be grouped into finer or coarser granules, according to the degree of discernibility required) and analysis of physical security logs (where time, users and nature of building accessed are relevant).

For example, in one application data items and values modelled and/or processed in embodiments of the present invention are security log records for a computer network, each record corresponding to a security occurrence in the network and identifying one or more network attached devices such as appliances, computer systems, software systems and the like that may be involved, affected, implicated or otherwise changed by a security event or occurrence. Such records can be generated by, for example, one or more of: a network intrusion detection system; a virus detection system; a network proxy; a malware detection system; a network appliance monitoring function; and other services and/or facilities as will be apparent to those skilled in the art.

Records in the set of data items can be determined to correspond to a network attack, such as by a security mechanism associated with, operable with or running on the network. In such a scenario, the membership levels can be defined to elicit at least one partition of the set of data items (log records) corresponding to such portion of data items. Where further records are received these can then be processed by the algorithms defined above to determining one or more partitions of the set of data items into which the new data item belongs based on the membership levels. In this way, it is possible to determine if the new data item is similar to records in the portion of records determined to correspond to a network attack. Where a positive determination is made, measures can be employed in response, such as by trigging one or more of: remedial; protective; and corrective measures in respect of network attached devices identified by the new data item.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer implemented method of grouping a set of data items comprising the steps of:

   receiving a graded similarity relation between items in the set of items, each graded similarity relation defining, for a pair of items, whether the items are determined to be similar and indicating a relative level of similarity;
   receiving a definition of a set of levels of similarity as membership levels such that a pair of items being determined to have a level of similarity meeting a membership level is associated with the membership level;
   partitioning the set of data items into a hierarchy of classes of data item each corresponding to a membership level by determining association of data items to each membership level.

2. The method of claim 1 wherein the level of similarity is one of a set of predefined levels of similarity.

3. The method of any preceding claim wherein the graded similarity relations are defined algorithmically.

4. The method of claim 3 wherein the algorithm for defining graded similarity relations includes one or more rules for determining similarity between pairs of items in the set.

5. The method of claim 3 wherein the algorithm computes a table of similarity relations between pairs of items.

6. The method of any preceding claim wherein the data items are security log records for a computer network, each record corresponding to a security occurrence in the network.

7. The method of claim 6 wherein the security log records are generated by one or more of: a network intrusion detection system; a virus detection system; a network proxy; a malware detection system; and a network appliance monitoring function.

8. The method of any of claims 6 to 7 wherein at least one portion of the records in the set of data items is determined to correspond to a network attack and the membership levels are defined to elicit at least one partition of the set of data items corresponding to such portion of data items.

9. The method of claim 8 further comprising: receiving a new data item as a security log record identifying one or more network attached devices; and determining a partition of the set of data items into which the new data item belongs based on the membership levels so as to determine if the new data item is similar to records in the portion of records determined to correspond to a network attack.

10. The method of claim 9 further comprising, responsive to a determination that the new data item is similar to records in the portion of records determined to correspond to a network attack, trigging one or more of: remedial; protective; and corrective measures in respect of the one or more network attached devices identified by the new data item.

11. A computer system including a processor and memory storing computer program code for performing the steps of any preceding claim.

12. A computer program element comprising computer program code to, when loaded into a computer system and executed thereon, cause the computer to perform the steps of a method as claimed in any of claims 1 to 10.

# FIGURE 1

| CPU 102 | STORAGE 104 | I/O 106 |
|---|---|---|

BUS 108

# FIGURE 2a

## FIGURE 2b

## FIGURE 3b

alpha

## FIGURE 3a

alpha

FIGURE 3c

FIGURE 3d

EP 3 609 150 A1

FIGURE 3e

000 001 11
alpha-1

b7,b6  000 000 11
alpha-3

b5

110 01
alpha-1

b0,b4  100 01
alpha-3

111 111 111 11
alpha-0

b1

b3

000 000 001 1
alpha-2

b8

b9

001 000 001 1
alpha-1

b2

alpha

b10,b8  000 000 001 01
alpha-3

b2

b5

alpha

EP 3 609 150 A1

21

# FIGURE 3f

000 001 11
alpha-1

000 000 11
alpha-3

b7,b6

b5

110 01
alpha-1

100 01
alpha-3

b0,b4

b1

111 111 111 11
alpha-0

b3

000 000 001 11
alpha-2

000 000 001 01
alpha-3

b8,b10

b9

001 000 001 1
alpha-1

b2

alpha

## FIGURE 4a

alpha

## FIGURE 4b

b10,b8

{b2}
alpha-2

{b8,b10}
alpha-3

{b5}
alpha-0

b2

b5

alpha

## FIGURE 5

# FIGURE 4c

alpha

# FIGURE 4d

alpha

## FIGURE 4e

b7,b6

b5

b0,b4

b1

b10,b8

b9

b2

b3

alpha

Europäisches
Patentamt

European
Patent Office

Office européen
des brevets

# EUROPEAN SEARCH REPORT

**Application Number**

EP 18 18 8529

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 330 868 A1 (BRITISH TELECOMM [GB]) 6 June 2018 (2018-06-06) * paragraph [0054]; table 2 * * paragraph [0100] * * paragraph [0010] * | 1-12 | INV. H04L29/06 G06N5/04 |
| X | PERDISCI R ET AL: "Alarm clustering for intrusion detection systems in computer networks", ENGINEERING APPLICATIONS OF ARTIFICIAL INTELLIGENCE, PINERIDGE PRESS, SWANSEA, GB, vol. 19, no. 4, 1 June 2006 (2006-06-01), pages 429-438, XP027932718, ISSN: 0952-1976 [retrieved on 2006-06-01] * page 1 * * page 4 * * page 8 * | 1-12 | |
| X | QIANG WANG ET AL: "A clustering algorithm for intrusion detection", PROCEEDINGS OF SPIE, vol. 5812, 28 March 2005 (2005-03-28), page 31, XP055551481, 1000 20th St. Bellingham WA 98225-6705 USA ISSN: 0277-786X, DOI: 10.1117/12.603567 ISBN: 978-1-5106-2099-5 * the whole document * | 1-12 | TECHNICAL FIELDS SEARCHED (IPC) G06N H04L |
| A | Anonymous: "Fuzzy clustering - Wikipedia", , 3 July 2018 (2018-07-03), XP055551680, Retrieved from the Internet: URL:https://en.wikipedia.org/w/index.php?title=Fuzzy_clustering&oldid=848647526 [retrieved on 2019-02-05] * the whole document * | 1-12 | |

The present search report has been drawn up for all claims

| Place of search | Date of completion of the search | Examiner |
|---|---|---|
| Munich | 5 February 2019 | Koblitz, Birger |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 18 8529

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2019

| Patent document cited in search report | Publication date | Patent family member(s) | Publication date |
|---|---|---|---|
| EP 3330868 A1 | 06-06-2018 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 16202205 A

**Non-patent literature cited in the description**

- **L. A. ZADEH.** Fuzzy Sets. *Information and Control,* 1965, vol. 8, 338-353
- **RUDOLF KRUSE et al.** Computational Intelligence - A Methodological Introduction. Springer
- **C D. MANNING et al.** Introduction to Information Retrieval. Cambridge University Press
- **T. P. MARTIN.** The X-mu representation of fuzzy sets. *Soft Computing,* 31 May 2014, vol. 19, 1497-1509
- **G. J. KLIR ; T. A. FOLGER.** Fuzzy Sets, Uncertainty, and Information. Prentice-Hall International Editions, 1988